Europäisches Patentamt

European Patent Office

Office européen des brevets

(11) Publication number: 0 280 790
A1

# EUROPEAN PATENT APPLICATION

(21) Application number: 87200365.2

(51) Int. Cl.⁴: A01D 57/02

(22) Date of filing: 02.03.87

(43) Date of publication of application:
07.09.88 Bulletin 88/36

(84) Designated Contracting States:
DE ES FR GB IT

(71) Applicant: FORD NEW HOLLAND N.V.
Leon Claeysstraat 3a
B-8210 Zedelgem(BE)

(72) Inventor: Decoene, Frans Joseph Gerard C.
Ruddervoordestraat 19
B-8210 Zedelgem(BE)

(74) Representative: Vandenbroucke, Alberic T.J.
FORD NEW HOLLAND N.V. Leon Claeysstraat
3A
B-8210 Zedelgem(BE)

(54) Header including reel for agricultural machine.

(57) A header for an agricultural machine is provided and which comprises, a cutterbar (1), an auger (3) and a rotatable reel (4). The reel (4) has a main shaft (5) defining a rotational main axis (83) around which, in use, it is rotated in one direction (89). Crop-engaging members (6, 7) rotatably are mounted on the reel (4) around respective further axes (84) disposed around the main shaft (5). Inclination control means (86) including steering means (87) positioned eccentrically of the main axis (83) are operable, during rotation of the reel (4) in said one direction (89) , to rotate the crop-engaging members (6, 7) around the respective further axes (84) in the opposite direction (90) so that, when said steering means (87) are kept stationary, the crop-engaging members (6, 7) also are maintained at a fixed positional inclination relative to the horizontal whereby the free ends of the crop-engaging members (6 7) define a circularly shaped locus (62).

Drive means (34) are associated with the steering means (87) for oscillating said steering means (87) during rotation of the reel (4) whereby the crop-engaging members (6, 7) equally are oscillated back-and-forth around their respective further pivot axes (84) on the reel (4) and the locus (63) of the free ends of the crop-engaging members (6, 7) deviates from said circular shape. With the header in the operative position and, as seen in side view of said header, said non-circular locus (63) has a first

portion (64) extending close to the ground (26), followed by a generally linear second portion (65) extending upwardly from the first portion (64) and passing a predetermined minimal distance above the cutterbar (1); and further also followed by a generally linear third portion (66) extending generally vertically from said second portion (65) and close to the auger (3).

FIG.1

# HEADER INCLUDING REEL FOR AGRICULTURAL MACHINE

This invention relates to headers for agricultural machines and, although it will be discussed primarily in conjunction with combine harvesters, it is to be understood that it is applicable to other agricultural machines as well. The invention more specifically is concerned with reels provided on such headers.

Conventionally, a header for an agricultural machine comprises a cutterbar operable to cut standing crop, an auger which receives cut crop material and normally feeds it to a central opening through which it passes to be processed by the machine to which the header is fitted, and a rotatable reel mounted generally above the cutterbar and operable to sweep standing crop towards the cutterbar and then to transport the cut crop material over the cutterbar to the auger. The reel normally comprises a plurality of tine bars (typically six) from which extend tines along the length thereof; the tine bars being mounted on the ends of spider arms spaced along the reel for rotation about the main axis of the reel. If no other mechanism were employed, the tines of each tine bar would undergo one revolution for each revolution of the reel but this is unacceptable because, to date, the tines have been required to maintain a constant orientation as the reel rotates, primarily to prevent the tines carrying cut crop material over the reel as opposed to disengaging or withdrawing from the cut crop material as the latter reaches the vicinity of the auger.

To this end, the tine bars have been made rotatable about their respective own axes on the reel and have been connected at their ends by respective crank arms to second spiders which are held offset from the first spiders. In operation, the reel including the first spiders are driven about the main axis which in turn drives the second spiders around an offset axis through the intermediary of the crank arms and in a manner so that the tine bars are rotated about their respective own axes in a direction opposite to that of the reel and by an equal amount, whereby the tines are maintained in a given orientation which is set by adjusting the position of the offset axis of the second spiders relative to the main axis of the reel.

With this conventional arrangement, the tips of the tines describe a circular path which can be positioned relative to the cutterbar by adjusting (usually by hydraulic cylinders) the reel in both a generally vertical direction and in a generally horizontal direction. Ideally, the tine path lies closely adjacent and above the cutterbar on the one hand and closely adjacent the forward edge of the auger on the other hand. However, this positioning may be adversely affected if the reel is moved forwardly and downwardly which may become necessary in order to let the tines pick up down crop, i.e. crop which is no longer standing upright due to inclement weather.

In SU-A-1063315 there is disclosed a reel for a combine harvester which basically is of the same type as described above but which includes a modification whereby the second or offset spiders are moved by a crank mechanism so as to vary the tine orientation during reel rotation with a view to minimizing crop losses due to flattened or down crop not being lifted by the tines for cutting by the cutterbar. Thus this modification concentrates on the problem of harvesting down crop and does not address the related problems of optimum spacing between reel and cutterbar, and transporting cut crop to the auger.

Accordingly, the object of the present invention is to provide a header including a reel for an agricultural machine and of which the reel has an optimal tine path and tine orientation from the standpoints of crop engagement prior to cutting, reel/cutterbar spacing, and crop transportation to the auger after cutting.

According to the invention there is provided a header for an agricultural machine comprising :
- a cutterbar operable to cut standing crop;
- a rotatable reel having a transverse shaft defining the rotational main axis thereof and including a plurality of crop-engaging members rotatably mounted thereon about respective further axes disposed around the main shaft;
- first drive means for rotatably driving the reel in one direction;
- inclination control means including steering means positioned eccentrically of the main axis; said inclination control means, during rotation of the reel in said one direction, being operable to rotate the crop-engaging members around the respective further axes in the opposite direction; the arrangement being such that, when the steering means are in a fixed position, the crop-engaging members are maintained at a fixed positional inclination with the free ends of the crop-engaging members defining a circularly shaped locus; and
- further drive means associated with the steering means for oscillating said steering means during rotation of the reel whereby the crop-engaging members equally are oscillated back-and-forth around their respective further pivot axes on the reel and the movement of the cropengaging members is accelerated during half of each oscillation cycle of the steering means and decelerated during the other half of each oscillation cycle of the steering means; the arrangement being such that the locus of the free ends of said crop-engaging members deviates from said circular shape and said non-circular locus includes an operative section in the vicinity of said cutterbar wherein the crop-engaging members engage crop material and sweep it across the cutterbar in a generally rearward direction; and which is characterized in that :
- the operative section of said non-circular locus corresponds substantially to one full oscillation cycle of the steering means starting from one extreme position of said steering means and passing via the other extreme position of said steering means back to the one extreme position;
- the portion of the non-circular locus associated with the half of said one full oscillation cycle wherein the crop-engaging members are accelerated, is positioned generally in front of the cutterbar; and
- the portion of the non-circular locus associated with the half of said one full oscillation cycle wherein the crop-engaging members are decelerated, is positioned generally rearwardly of the cutterbar.

The operative section of the non-circular locus of the cropengaging members comprises : a first portion which, in use of the header, extends close to the ground, followed by a generally linear second portion extending, in use, upwardly from the first portion and passing a predetermined distance above the cutterbar, and which, in turn, is followed by a generally linear third portion extending generally vertically, close to the auger.

Thus the oscillation of the steering means by the further drive means enables the crop-engaging members to be oriented and displaced so as to fulfil the required three primary functions without the fulfilment of any one of these requirements detracting from the fulfilment of any other, namely :
- the lifting of any down crop:
- the supporting of the engaged crop close to the cutterbar for cutting; and
- the transporting of the cut crop from the cutterbar to the auger and the disengaging of the crop immediately adjacent the auger.

A significant feature of this aspect of the present invention is that the transition between the two generally linear second and third portions of the locus of the outer ends of the crop-engaging members extends into what is normally a dead space between the cutterbar and the auger where cut crop material tends to collect. Thus this dead space is constantly cleared, at least to a greater extent than normal, with the present invention.

The further drive means may comprise a linkage mechanism incorporating a crank and a bellcrank lever for effecting said oscillation of the steering means. The first and further drive means are interrelated such that the further drive means oscillates the steering means a predetermined number of times per revolution of the reel. In this respect, it is necessary to allow each oscillation of the steering means to correspond with a given arc of a revolution of the reel in order to provide a section of the locus corresponding to one full oscillation of the steering means, which is of sufficient length so that it substantially corresponds with the operative portion of said locus, i.e. the portion of the locus where the tines are in contact with the crop. To this end, an arc of around 100° has been found to be satisfactory and a particularly convenient configuration for a reel having six crop-engaging members equispaced around its main shaft is :
- to split the crop-engaging members into two sets of three; - to provide a separate inclination control means including a steering means for each set and; - to oscillate each steering means three times per revolution of the reel so that the operative portion of the locus corresponds to a rotation of the reel through 120°.

According to a second aspect of the invention :
- the crop-engaging members are divided into two sets such that one crop-engaging member of one set alternates with one crop-engaging member of the other set; and
- further drive means and inclination control means including steering means are associated with each set of crop-engaging members; said further drive means, inclination control means and steering means being operated in phased relationship such that the loci of both sets of crop-engaging members at least substantially overlap each other.

The splitting of the crop-engaging members into two sets is a significant step in providing a suitably large arc over which the variation in orientation of the crop-engaging members can be implemented. The arc over which the variation of the orientation of the crop-engaging members is effected in the vicinity of the cutterbar is preferably set by arranging for the radius extending from the end of the arc, as seen in the direction of rotation of the reel, to the axis of rotation of the reel to be generally parallel to the ground.

Headers for agricultural machines in accordance with the invention will now be described in greater detail by way of example with reference to the accompanying drawings, in which : -

Figure 1 is a schematic side view of a header according to the present invention and with portions broken away for the sake of clarity; said header being adapted for use in combination with an agricultural machine such as a combine harvester,

Figure 2 is a detail, to a larger scale, of Figure 1,

Figure 3 is a detail, to a larger scale, of Figure 2 with components in different relative positions,

Figure 4 is a section on the line IV-IV of Figure 3,

Figure 5 is a partial view in the direction of arrow V in Figure 1, with some components shown in section,

Figure 6 is a view similar to that of Figure 1 but showing some components in different relative positions,

Figure 7 and 8 are partial schematical views of Figure 1 showing two different variations in orientation of the crop-engaging members in relation to the cutterbar and auger of the header.

The terms "forward", "rearward", "fore-and-aft", "transverse", "left", "right", etc. used in connection with the combine harvester and/or components thereof, are determined with reference to the direction of forward operative travel of the combine harvester but should not be considered as limiting.

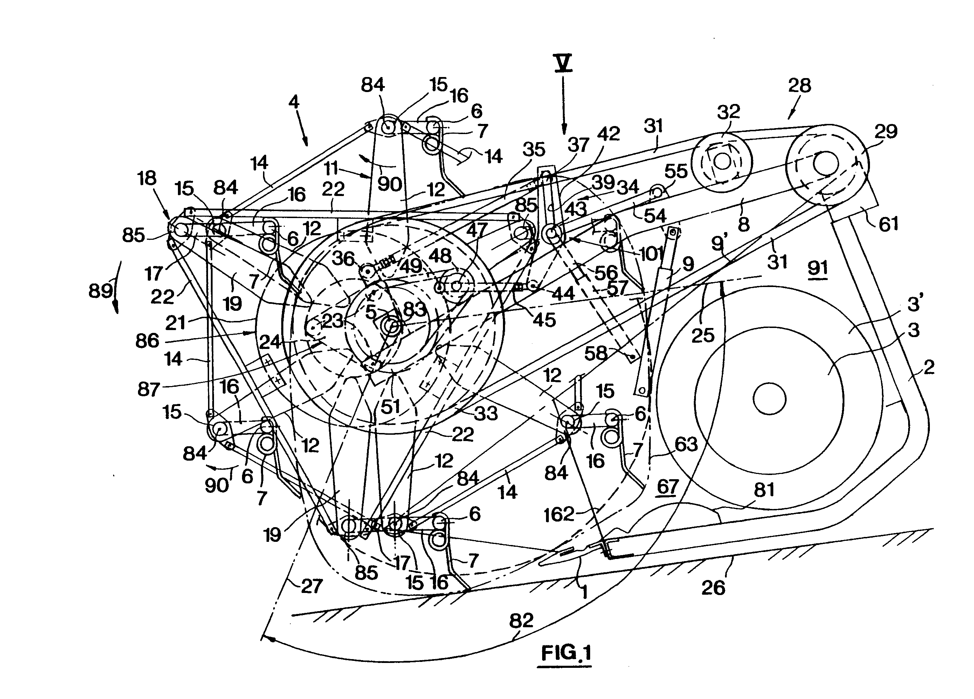

Referring first primarily to Figures 1 to 5, the header shown therein typically may be employed on a combine harvester (not shown) and comprises a cutterbar 1 which is mounted on a header frame 2, the latter further also supporting an auger 3 having oppositely directed flights 3' at respective ends for feeding cut crop material to a central outlet (not shown) in the header through which the crop material passes for processing by the combine harvester.

The cutterbar 1 conventionally is mounted at a distance forwardly of the auger 3. A header floor 81 shaped in a particular manner as is conventional extends rearwardly from the cutterbar 1 and beneath the auger 3. The header floor 81 and the auger 3 define a generally triangularly shaped crop transfer zone 67 therebetween.

The header further comprises a reel 4 mounted for rotation about the axis 83 of a main shaft 5 (comprising a tube carrying a stub shaft at each end) and which includes six crop-engaging members in the form of tine bars 6, equispaced around the main shaft 5 and each having a plurality of spring tines 7 extending therealong. The reel 4 is mounted between the generally forward ends of two arms 8, the rearward ends of which are pivotally attached to the header frame 2 and which can be raised and lowered, together with the reel 4, by respective hydraulic cylinders 9.

The main shaft 5 carries at each end a spider 11 having six radial arms 12 equispaced around, and connected at one end to, a ring 13 which itself rigidly is attached to said main shaft 5. The radial arms 12 are interconnected at their other ends by chord arms 14. A plurality of intermediate spiders (not shown) of similar form as the end spiders 11 also are provided. The radial arms 12 of each spider 11 rotatably carry at their outer ends stub shafts 15. Crank arms 16 are connected at one end to the inwardly facing ends of the stub shafts 15 associated with the outer spiders 11 and to the respective opposite ends of the stub shafts 15 associated with the intermediate spiders. The other ends of corresponding adjacent crank arms 16 are interconnected by tine bar sections 6 in a manner so as to define the aforementioned six crop-engaging members 6, 7 which extend across the full width of the reel 4 at equiangular intervals around the circumference of said reel 4 and in offset relationship relative to the outer ends of the spider arms 12. Said crop-engaging members 6, 7 thus are mounted on the outer ends of the spider arms 12 for rotational movement around the axes 84 defined by the stub shafts 15.

Alternate crop-engaging members 6, 7, each comprising a plurality of tine bar sections 6, have a further crank arm 17 coupled to the outwardly facing ends of the associated stub shafts 15 rotatably mounted on one end spider 11. The other crop-engaging members 6, 7 have a similar further crank arm 17 coupled to the outwardly facing ends of the associated stub shafts 15 rotatably mounted on the opposite end spider 11. Thus three further crank arms 17 are associated with each spider 11.

Inclination control means 86 for the crop-engaging members 6, 7 are provided which include a.o. an eccentric spider 18 associated with each one of the outer spides 11. Each eccentric spider 18 comprises three radial arms 19 which are equispaced around a flanged ring 21 which itself is mounted concentrically with each eccentric spider 18; the axis of rotation of which is offset from that of the main shaft 5. The eccentric spider radial arms 19 are interconnected at their outer ends by chord arms 22 and further also rotatably receive further stub shafts 85 connected to the free ends of corresponding further crank arms 17. Thus the crop-engaging members 6, 7 are split into two sets of three members which are associated with respective eccentric spiders 18.

The inclination control means 86 further also comprise, at each transverse end of the reel 4, a steering means 87 in the form of a set of three rollers 23 mounted on a generally triangular plate 24 which itself is mounted for oscillating movement around the main axis 83 at a point offset from its center, whereby the plate 24 acts as a crank arm. The interior of each flanged ring 21 is arranged to be supported on the three rolles 23 of the associated plate 24.

Only one eccentric spider 18 and associated steering means 87 in the form of said plate 24 with the three rollers 24 thereon, is shown in the Figures 1, 2 and 5. However, as already said, two eccentric spiders 18 and associated steering means 87 are provided with the two steering means 87 being angularly offset from each other, when seen in side view of the header and relative to the main axis 83, so that successive crop-engaging members 6, 7 are presented in the correct manner, as will be described, over their operative arc of operation 82 relative to the cutterbar 1 and the auger 3. By the operative arc 82 of the tine bars 6 is meant the arc over which the tine bars 6 are moved when the associated tines 7 generally commence engaging crop material close to the ground 26 until said tines 7 finally generally disengage cut crop material as will be described in greater detail hereinafter. In as much as each eccentric spider 18 controls the position of only three crop-engaging members 6, 7, the latter are spaced 120° apart and this basically corresponds to the angular dimension of the operative arc 82 of the crop-engaging members 6, 7. This operative arc 82 is shown in Figures 1, 7 and 8 by a line 25 extending from the axis 83 of the main shaft 5 toward the auger 3 and being generally parallel to the ground line 26, and a line 27 which is spaced 120° back from the line 25. When the stub shafts 15 of one crop-engaging member 6, 7 coincide with the line 25, then the stub shafts 15 of another crop-engaging member 6, 7 of the same set of crop-engaging members 6, 7 coincide with the line 27. The portion of the locus 63 of the free ends of the tines 7 which corresponds with this operative arc 82 further will be referenced hereinafter with the reference 88. It will be appreciated that this operative section 88 of the locus 63 and the operative arc of operation 82 of the crop-engaging members 6, 7 are offset relative to each other to the extent that the free ends of the tines 7 are spaced at a distance from the corresponding stub shafts 15.

The reel 4 is driven in the direction 89 by first drive means 28 comprising a drive pulley 29 (which itself is driven from the combine harvester), a belt 31 extending from the drive pulley 29 over an idler pulley 32 to a pulley 33 mounted concentrically on the main shaft 5, and back to the pulley 29. On rotation of the drive pulley 29, the main shaft 5 is rotated by the pulley 33 and thus the spiders 11 (and intermediate spiders) and hence also the crop-engaging members 6, 7 equally are rotated in said direction 89 around the main axis 83 of the reel 4. However, in view of the presence of the crank plates 24 with the rollers 24 thereon and the eccentric spiders 18 (which together form the inclination control means 86), the crop-engaging members 6, 7 are caused to rotate, during said rotation of the reel 4 around the main axis 83 in the direction 89, by an equal angular displacement in the opposite direction 90 around the respective further axes 84 of the stub shafts 15 whereby the tine bars 6, and hence the tines 7 carried thereby, are maintained in a resultant nominal fixed orientation. The locus of the outer tips of the tines 7 under these operating conditions is a circle. This basic operation of the reel 4 is conventional.

However, during operation and provided the reel 4 is in an operative position close to the cutterbar 1, the angular position of the steering means 87 is varied continuously by further drive means 34 associated therewith. These further drive means 34 are split into two identical drives, one for each eccentric spider 18. Essentially, the further drive means 34 cause the steering means 87 to oscillate to advance and retard the tine bars 6 so as to alter the nominal fixed orientation of the tines 7.

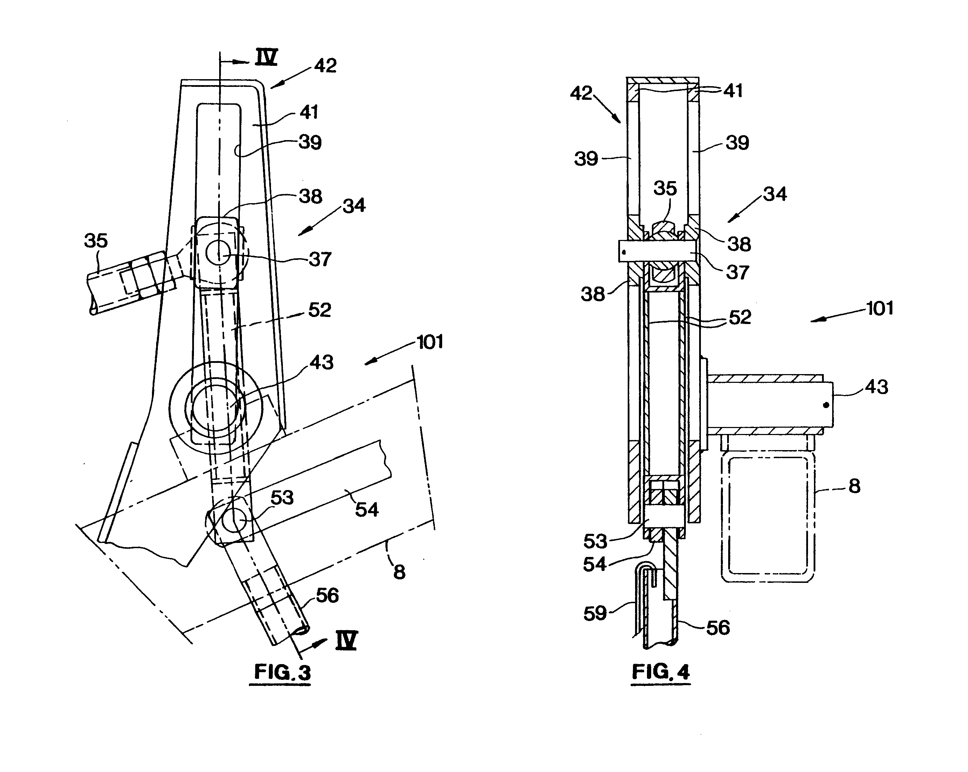

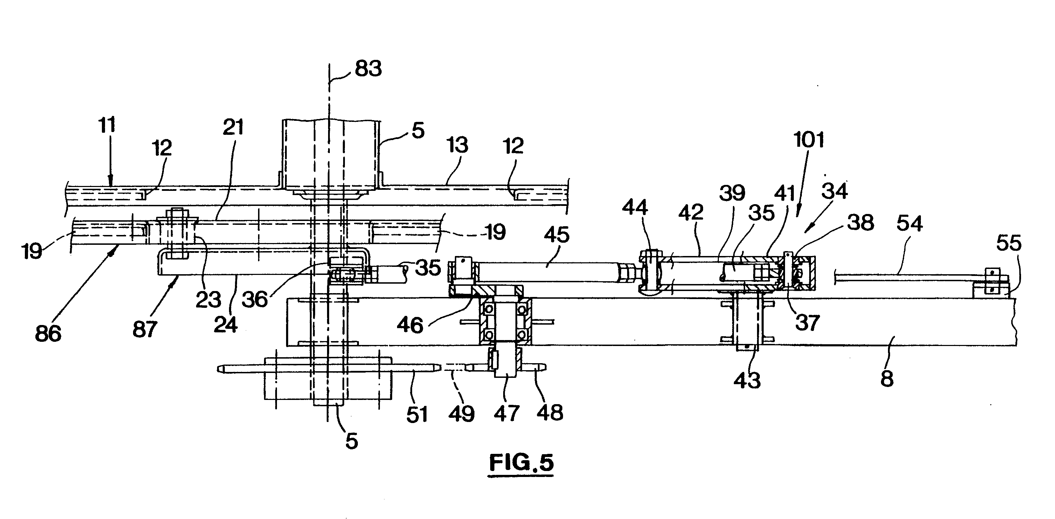

Each drive of the second or further drive means 34 comprises an adjustable con rod 35 pivoted at one end to a lug 36 attached to the associated crank plate 24 and pivotally attached at the distal end by a pivot 37 to a slide block 38 (Figures 3 and 4) which is slidably mounted in slots 39 in a bifurcated arm 41 of a bell-crank lever 42, the con rod 35 passing between the bifurcations of the arm 41. Thus the one (upper) pivot of the bell-crank lever 42 is the pivot 37 which is adjustably positioned by virtue of the slide block 38 for a reason to be explained hereinafter. The central pivot of the bell-crank lever 42 is a pivot 43 provided on the associated reel arm 8, and the third bell-crank pivot is a pivot 44 to which is attached one end of a rod 45 the distal end of which is pivotally attached to one end of a crank arm 46 (best seen in Figure 5), the other end of which is attached to a crank shaft 47 carrying a sprocket 48 driven by a chain 49 from a sprocket 51 attached to the main shaft 5 of the reel 4. The sprocket 51 has three times as many teeth as the sprocket 48 whereby, for each revolution of the reel 4, the crank arm 46 makes three revolutions and hence the steering means 87 also makes three complete oscillations.

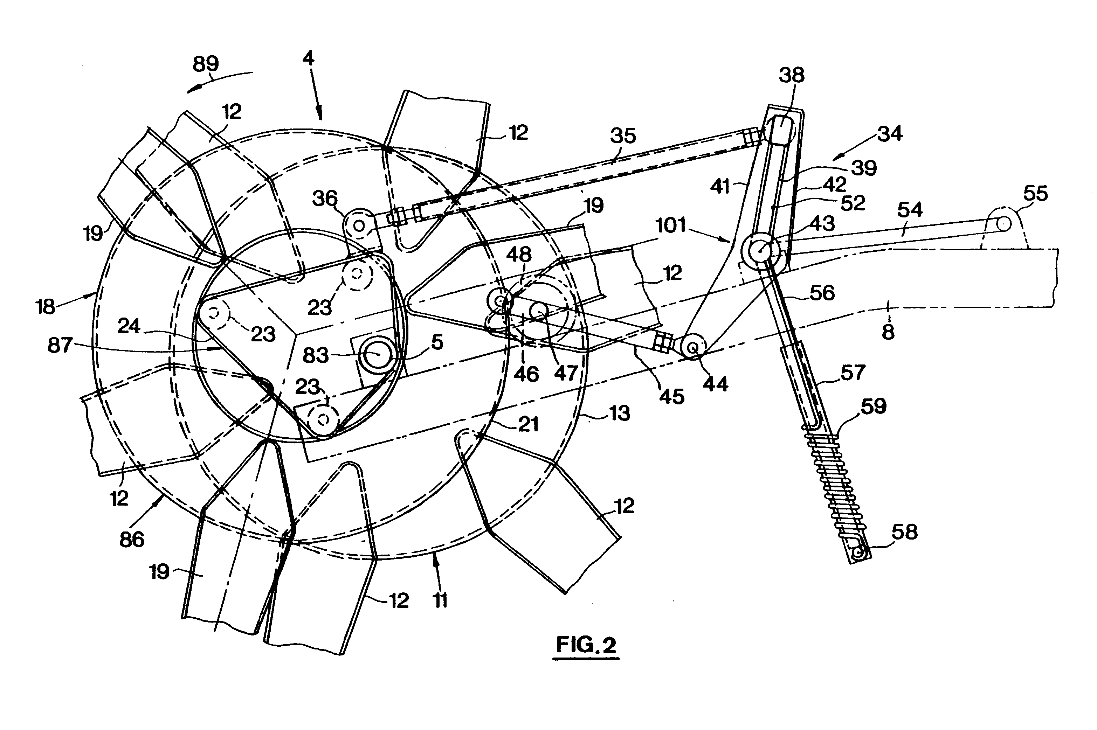

A pull rod 52 (Figures 3 and 4) is pivotally connected to one end to the pivot 37 and is disposed between the bifurcations of the bell-crank lever arm 41. The other end of the pull rod 52 is pivotally connected at a pivot 53 to as well one end of a support link 54 (which itself is pivotally attached at the other end to a lug 55 carried by the associated reel arm 8) as to one end of a rod 56 which is telescopically received in a tube 57 which in turn is pivotally mounted at 58 on the associated side wall 91 of the header. A compression spring 59 (Figures 2 and 4) has one end hooked around the pivot 58 and the other end hooked over the end of the rod 56 which is in the form of a tube as shown in Figure 4.

In use, the header is mounted on the combine harvester via a transverse beam 61 forming part of the header frame 2. The reel 4 is lowered to the required working height by contracting the hydraulic cylinders 9 on the respective sides of the header. In the fully lowered position of the reel 4, the slide blocks 38 of the two drives together forming the second drive means 34 are pushed to the top of the respective bell-crank lever arms 41 by virtue of the rods 56 bottoming in the associated tubes 57 on lowering of the reel 4. This operative position is that illustrated in Figures 1 and 2 of the drawings.

When the crop is to be harvested, drive to the reel 4 is initiated and the latter rotates in the direction 89. If the further drive means 34 were inoperative, the tines 7 would be maintained in a nominal fixed orientation by the presence of the eccentric spiders 18 and the steering means 87 as already described. However, with the reel 4 in a lowered position relative to the cutterbar 1, the further drive means 34 are made operative as still will be described in further details.

On rotation of the main shaft 5 of the reel 4, the sprockets 51 also are rotated and thus the sprockets 48 are driven so as to drive the crank shafts 47 and hence the crank arms 46. Rotation of the crank arms 46 reciprocates the associated rods 45 which in turn rocks the bell-crank levers 42 about the pivots 43. This rocking of the bell-crank levers 42 effects reciprocation of the con rods 35 which in turn rocks the associated crank plates 24 whereby the positional inclination of the tines 7 is varied. In view of the 3:1 ratio of the respective sets of sprockets 51 and 48, the bell-crank levers 42 are rocked three times per revolution of the reel 4, whereby the crank plates 24 also are rocked in the same manner so that the tines 7 are oscillated three times back-and-forth around the respective further axes 84 on the spider arms 12 per one full oscillation cycle of the steering means 87 corresponds to one third or 120° of a full revolution of the reel 4. Furthermore, and as already explained, the operative arc 82 of the tine bars 6 as defined by the lines 25 and 27 also extends over an angle of 120°. This operative arc 82 is the result of one oscillation cycle of the steering means 87.

From what precedes it also will be appreciated that the movement of the reel tines 7 is accelerated during half of each oscillation cycle of the steering means 87 and decelerated during the other half of said oscillation cycle. The result thereof is that the locus 63 of the free ends of the tines 7 deviates from the conventional circular shape.

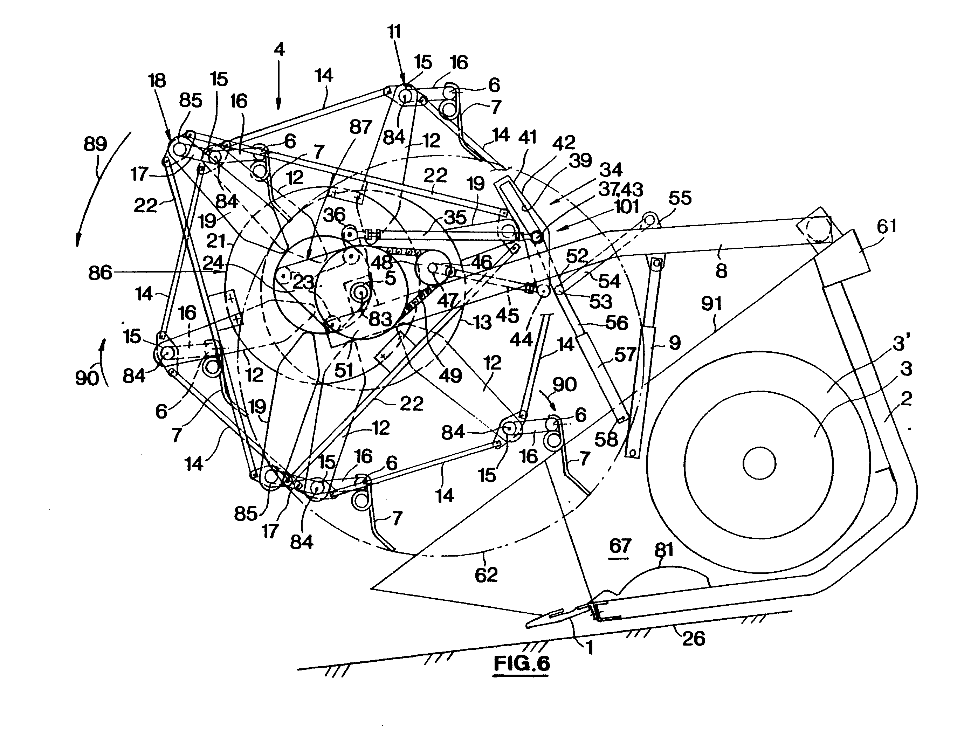

If the crop conditions are good and there is, for example, an absence of flattened or down crop, then the combine harvester operator normally elects to raise the reel from the position shown in Figure 1 to an alternative operative position which is shown in Figure 6. By this movement, the second drive means 34 are neutralized through the intermediary of drive neutralizing means 101 which saves wear on the drive components which are thereby arrested, and also effects a saving in power consumption. This neutralizing of the second drive means 34 is effected as follows. When the reel arms 8 are raised, the bell-crank levers 42 also are raised but the respective slide blocks 38 are held stationary by the springs 59 which are presently in extension. Thus, the bell-crank levers 42 move past the slide blocks 38 until such time as the slide block pivots 37 coincide with the respective central bell-crank pivots 43. At this point, no further relative movement between the bell-crank levers 42 and the slide blocks 38 is possible so that continued raising of the reel arms 8 pulls the rods 56 out of the tubes 57. It will be appreciated that the arresting of the relative movement between the bell-crank levers 42 and the slide blocks 38 is effected by the latter bottoming in the slots 39 in the bell-crank arms 41. It will also be appreciated that, when the respective pairs of pivots 37 and 43 coincide, the rocking of the bell-crank levers 42 on rotation of the reel 4 (this part of the drive not being neutralized) no longer causes reciprocation of the con rods 35 whereby the second drive means 34 is neutralized.

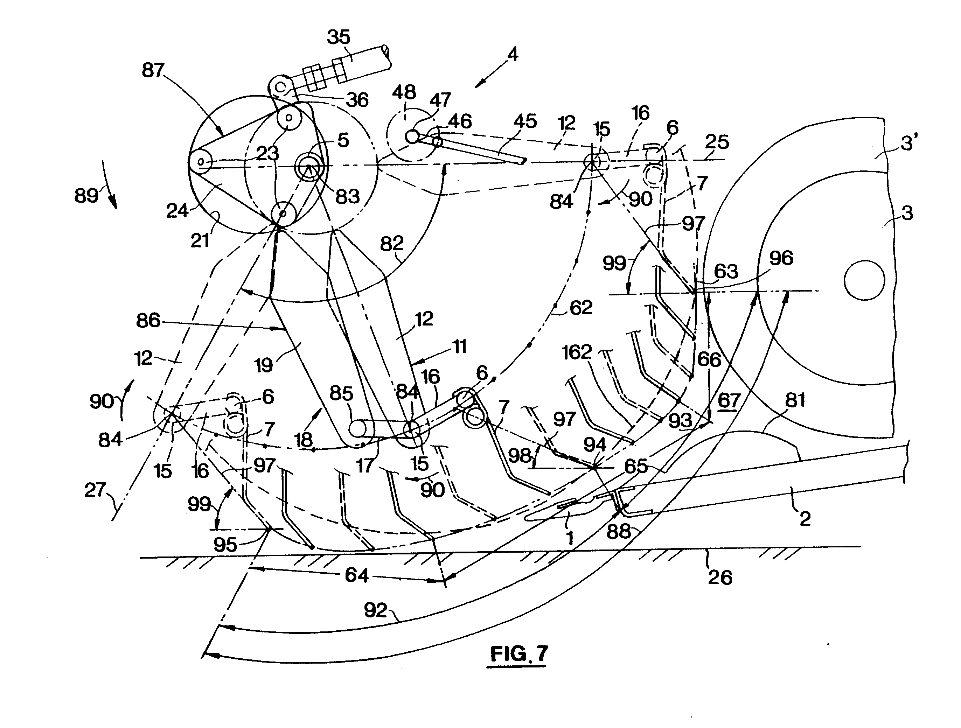

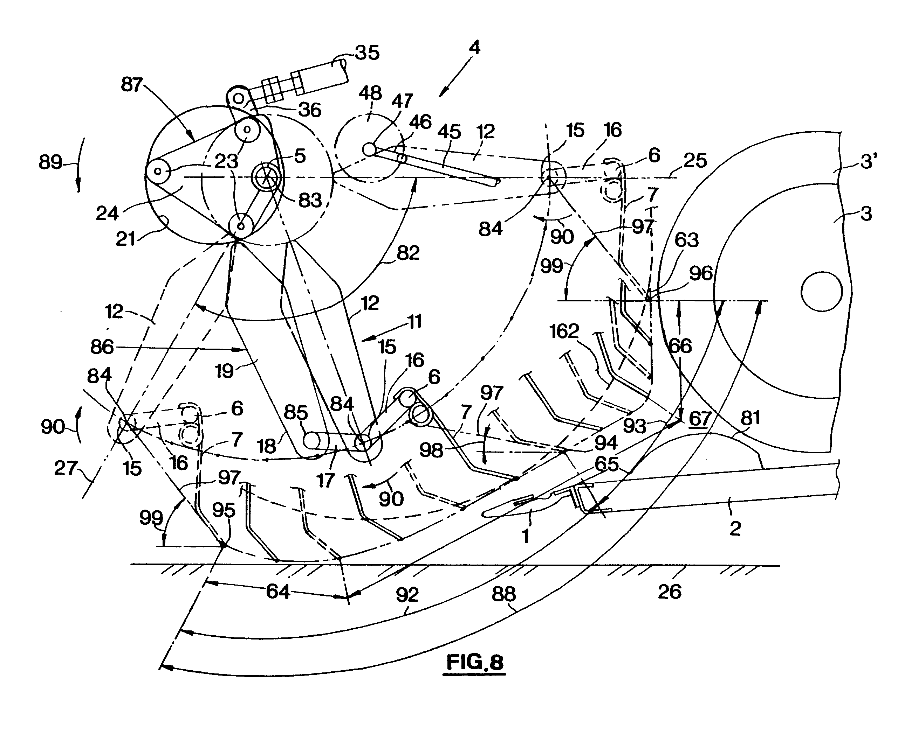

Returning briefly to Figure 6 of the drawings, it will be seen that the locus 62 of the outer tips of the tines 7 is a circle which is as with a conventional header. However, Figures 1, 7 and 8 illustrate the non-circular loci 63 which result from the present invention. These loci 63 comprise the operative section 88 as already described and which basically is the section wherein the tines 7 engage crop material and sweep it across the cutterbar in a generally rearward direction to finally release said crop material at a location rearwardly of the cutterbar 1 and in front of the auger 3. The operative section 88 of the non-circular locus 63 basically has three distinct portions; the first portion 64 being arcuate but lying close to the ground 26 in order to pick up any flattened crop. The following portion 65 of the operative section 88 of the locus 63 is seen to be substantially linear and extends upwardly from the first portion 64 very close above the cutterbar 1. The final portion 66 of the operative section 88 of the locus 63 which follows the second portion 65 is also substantially linear and extends generally vertically very close to the forward edge of the auger 3 to which the crop material cut by the cutterbar 1 needs to be transported in an efficient manner. The transition between the second and third portion 65 and 66 extends into the generally triangular (as seen in side view) dead space 67 which traditionally exists between the cutterbar 1 and the auger 3 of a header. This extension into the dead space 67 helps to clear, at least to a better extent than normal, any crop material which tends to lodge in this space. It will be seen from Figure 8 when compared with Figure 7 that a larger oscillation stroke of the steering means 87 causes the tines 7 to sweep deeper into the dead space 67 on the one hand and is such as to make the second and third portions 65, 66 of the operative section 88 of the locus 63 more linear on the other hand.

It will be appreciated that the tines 7 preferably should be oriented generally vertically when they enter into the crop material at the forward end of the operative section 88 of the locus 63 so as to facilitate this entrance (especially when the crop material is flattened) and to reduce cutterbar losses (i.e. grain losses occurring in front of the cutterbar 1 due to a.o. the reel components shaking grain kernels out of the ears). Similarly the reel tines 7 preferably also should be oriented generally vertically at the rearward end of the operative section 88 of the locus 63 so as to facilitate the release of crop material to the auger 3. However, inbetween these two extreme positions the reel tines 7 preferably should be generally inclined relative to vertical in·a manner to facilitate lifting of the crop material and positively conveying it across the cutterbar 1 in a rearward direction.

These desirable features are obtained by the reel under consideration o.a. by timing the first and further drive means 28, 34 so that, in the operative section 88 of the locus 63, the movement of the tines 7 changes from an accelerated to a decelerated movement at a location 94 generally vertically above the cutterbar 1 with the positional inclination of the crop-engaging members and more specifically of the reel tines 7 thereof relative to the horizontal being the smallest at this location. In other words, the steering means 87 pass through an extreme position when the reel tines 7 pass across the cutterbar 1. Furthermore, the operative section 88 of the non-circular locus 63, i.e. the section of the locus 63 where the reel tines 7 are in contact with the crop material, should correspond substantially with one full oscillation cycle of the steering means 87. Thus the steering means 87 start from one extreme position when the reel tines 7 are at the forward end 95 of said operative section 88 of the locus 63 and pass via the other extreme position (when the reel tines 7 are positioned generally vertically above the cutterbar 1) to finally return to said one extreme position when the reel tines 7 are at the rearward end 96 of the operative section 88 of the locus 63. Accordingly the portion 92 of the non-circular locus 63 associated with the half of said one full oscillation cycle wherein the crop-engaging members 6, 7 are accelerated, is positioned generally in front of the cutterbar 1 and the portion 93 of the non-circular locus 63 associated with the half of said one full oscillation cycle wherein the crop-engaging members 6, 7 are decelerated, is positioned generally rearwardly of the cutterbar 1. The reel tines 7, when in their position of maximum inclination relative to the horizontal at or proximate to the rearward end 96 of the operative section 88 of the locus 63, have their free ends located generally proximate to the forward edge of the header auger 3 so that the portion 93 of the operative section 88 of the locus 63 wherein the reel tines 7 are decelerated, extends generally between the cutterbar 1 and the header auger 3.

Returning now briefly to the transition between the second and third portions 65 and 66 of the locus 63 as already described, it further also will be appreciated that, at this transition, the straight line 97 between the free end of the reel tines 7 and the further pivot axis 84 of said reel tines 7 on the reel 4 (as seen in side view of the reel) should be aligned with the radius of the reel 4 extending between the main axis 83 and said further axis 84, whereby maximum penetration of the reel tines 7 into the dead space 67 is obtained. This is obtained by proper dimensioning and positioning of various components of the reel as will be appreciated. Also the timing of the first and further drive means 28 and 34 should be such that this alignment between the radius of the reel and said straight line 97 is obtained when the reel tines 7 have their free ends positioned substantially midway between the cutterbar 1 and the forward edge of the header auger 3. This alignment is obtained upon completion of substantially three quarters of the oscillation cycle of the steering means 87. To illustrate the difference in the depth of penetration of the reel tines into the crop transfer zone 67 when comparing a conventional header with the header embodying the present invention, the circular locus 162 of a conventional reel also has been added in Figures 1, 7 and 8 illustrating the non-circular locus 63 of the arrangement according to the present invention. Both loci 63 and 162 are positioned in the close vicinity of both the cutterbar 1 and the auger 3.

When positioned with their free ends at the turning point 94 of the locus 63 (i.e. at the position where the accelerated movement of the reel tines 7 turns into a decelerated movement, or where the reel tines 7 are at their maximum positional inclination relative to the vertical), the reel tines 7 are oriented so that the straight line 97 between said ˙ free ends of the reel tines 7 and the associated further pivot axes 84 defines an angle 98 in the range of 0°-20° relative to the horizontal. When positioned in the positions 95, 96 corresponding with the start and end of an oscillation cycle of the steering means 87 (i.e. at the position where the reel tines 7 are at their minimum positional inclination relative to the vertical), said straight line 97 defines an angle 99 in the range of 30°-60° with the horizontal.

It will be appreciated that, by virtue of the tine bars 6 being mounted via crank arm 16 in offset relationship relative to the respective further pivot axes 84, the main dimension of the reel tines 7 is inclined at a different angle relative to the horizontal than said straight line 97 between the free ends of the tines 7 and the associated further axes 84. To the extent that the aforementioned offset is in the direction toward the auger 3, said main dimension of the reel tines 7 always is inclined at a steeper angle relative to the horizontal than said straight line 97. By this offsetting fo the reel tines 7 it has become possible to orient said reel tines 7 so that, when positioned in the vicinity of the cutterbar 1, the main dimension of said reel tines 7 is oriented generally perpendicularly to the non-circular locus 63 at this location. This is advantageous to the extent that, when the tines are excessively loaded over this portion of the locus 63 and thus are flexed against their general direction of movement, they will not interfere with the cutterbar 1.

As described above, each steering means 87 controls the oscillating movement of three tine bars 6 which are 120° spaced apart. The steering means 87 further also completes three cycles per one revolution of the reel 4. One oscillation cycle of the steering means 87 thus also corresponds to one third or 120° of a full revolution of the reel 4. This relationship between the number of tine bars 6 of which the angular position is controlled by a steering means 87 on the one hand and the number of oscillations of this steering means 87 on the other hand is essential to ensure that the operative section 88 of the locus 63 always remains properly positioned relative to the cutterbar 1 and the auger 3. This condition can be stated in more general terms as follows : The (or each) steering means 87, which controls the angular position of n tine bars 6 having their respective further pivot axes 84 equiangularly spaced around the main axis 83 of the reel 4, also should complete n oscillation cycles during one full revolution of the reel 4. Thus, one oscillation cycle of the steering means 87 corresponds to $360/n°$ of a full revolution of the reel and, as this $360/n°$ generally should correspond to the operative section 88 of the locus 63, it will be appreciated that n in this formulae cannot vary widely. From a practical viewpoint, n may equal only 2, 3, 4 or 5 with 3 clearly being the preferred value.

While that the arrangement as described in connection with Figures 1 to 6 comprises further drive means 34 which includes a.o. a drive neutralizing means, it will be appreciated that these drive neutralizing means may be left out whereby the further drive means 34 can be simplified rather substantially. In its most simple form the further drive means 34 consists of a linkage mechanism incorporating a crank arm 46 which is drivingly coupled to the reel shaft 5 to be rotated thereby, and a link 35 connected between said crank arm 46 and the steering means 87 of the inclination control means 86. Such further drive means 34 are shown in Figures 9 and 10 of the co-pending application no. entitled "Header for agricultural machine including fore-and-aft adjustable reel" and the disclosure of which is included herein by reference. In any event, the transmission ratio between the reel shaft 5 and the crank arm 46 should be so that for any one revolution of the reel 7, the crank arm 46 makes n rotations wherein n represents the number of tine bars 6 of which the positional inclination is controlled by said crank arm 46 and the associated steering means 87.

As already mentioned, the tine bars 6 are divided in two sets such that one tine bar 6 of one set alternates with one tine bar 6 of the other set. Stated otherwise, one tine bar 6 of one set is positioned precisely in the middle between two tine bars 6 of the other set. In the preferred embodiment illustrated in the drawings, the two sets of tine bars 6 are 60° offset relative to each other. This offsetting of the tine bars 6 of both sets also necessitates a corresponding timing of the oscillations of the respective steering means 87 to the extent that, when one tine bar 6 of one set e.g. is positioned at the turning point 94 of the locus 63 above the cutterbar 1, the adjacent tine bars 6 of the other set are positioned at the forward, respectively rearward ends 95 and 96 of the operative section 88 of the locus 63. As already mentioned, the tines 7, when positioned with their free ends at the turning point 94 of the locus 63, assume a maximum positional inclination relative to the vertical and, when positioned at the forward or rearward ends 95, 96 of the operative section 88 of the locus 63, assume a minimum positional inclination relative to the vertical. Accordingly, when one steering means 87 associated with the one set of tine bars 6 is in one extreme position, the other steering means 87 associated with the other set of tine bars 6 should be in the other extreme position. This also means that the cranks 46 of the further drive means 34 on both sides of the reel 4 should be 180° out of phase. If this requirement is respected, the loci 63 of the reel tines 6 associated with both sets of tine bars 6 overlap each other as will be appreciated. Thus all crop-engaging members 6, 7 have identically positioned operative arcs 88 of the loci 63 in the cutterbar area.

Keeping in mind that all tines 7, of which the positional inclination is controlled by one and the same steering means 87, at all times assume identical positional inclinations, it also can be derived from the foregoing that, when one tine bar 6 has its tines 7 positioned at the turning point 94 of the locus 63, all tines 7 of one set of tine bars 6 assume one positional inclination which is different from the positional inclination of the tines 7 of the other set of tine bars 6. The foregoing is illustrated in the figures 7 and 8. However, as the reel 4 rotates further in the direction 89, the foregoing changes and, when the tines 7 of one tine bar 6 have their free ends at the point of maximum penetration into the dead space 67, i.e. when the oscillation cycle of the corresponding steering means 87 is 3/4 complete, all tines 7 of both sets of tines bars 6 have the same intermediate positional inclination. This condition is illustrated in Figure 1.

The nominal fixed orientation of the tines 7 is set by angular adjustment of the crank plates 24 about the main shaft 5 of the reel 4. The adjustability of the con rods 35 enables this initial nominal orientation to be set as required.

The extent of rocking movement of the bellcrank levers 42, and hence the extent of oscillation of the crank plates 24, is determined a.o. by the length of the crank arms 46 and Figures 7 and 8 illustrate two different extents of said oscillating movement; said figures illustrating an overall stroke of the steering means 87, of respectively 30° and 40°.

It will be seen that the employment of the present invention presents the tines 7 over the operative arc 8 adjacent the cutterbar 1 and auger 3 in an optimum manner in order to fulfil the three basic requirements of lifting flattened crop, taking it close to the cutterbar 1 for cutting, and transporting cut crop as close as possible to the auger 3 before disengaging it. In the latter respect, it will be noted that during operation, the tines 7 initially have their main dimension oriented generally vertically and have their operative ends moving downwardly along a generally vertical section of the locus 63 when entering the crop material on the field (see the section of the locus 63 immediately forwardly of the portion 88 in Figure 1). This movement quickly changes into a generally rearwardly and horizontally directed movement in the section 64 of the locus 63 while that, at first, the general orientation of the tines remains substantially the same i.e. with the main dimension oriented generally vertically. The foregoing taken in combination with the forward movement of the combine harvester ensures that the reel tines 7 enter the crop material smoothly whereby cutterbar losses are reduced and the reel tines 7 positively engage the crop material without any hesitation for subsequently lifting and conveying said crop material. Thereafter, the rearward movement of the reel tines 7 gradually changes into a slightly upwardly and rearwardly directed movement while that the tines 7 equally gradually are inclined towards an inclined orientation for providing a scooping effect whereby crop material is presented in a positive manner to the cutterbar 1 for cutting and subsequently is conveyed rearwardly over the cutterbar equally in a positive manner. As the movement of the reel tines 7 changes from a generally rearward movement into a generally vertical movement at the transition from section 65 to section 66 of the locus 63, said reel tines 7 penetrate much deeper into the dead zone 67 than is conventional, whereby possible hesitation in the transfer of crop material from the cutterbar 1 to the auger 3 is greatly reduced. Simultaneously as the reel tines 7 move rearwardly beyond the cutterbar 1, the orientation of said tines 7 gradually returns to a generally vertical orientation. This generally vertical orientation combined with the upward movement in a generally vertical direction of the reel tines 7 in the last portion 66 of the operative section 88 of the locus 63 and in the immediate vicinity of the forward edge of the auger 3 effects a clean disengagement of the crop material so that the latter is not carried around the reel 4 by the tines 7 and a smooth transfer of the crop material to the auger 3 is guaranteed.

It will be appreciated from the foregoing description that the present invention affords a significant advance in the art of presenting crop material to the cutterbar of a header and transporting cut crop material to the header auger, whereby harvesting efficiency is considerably increased.

Furthermore, the splitting of the tine bars 6 into two sets in order to provide an adequate operative arc of the tines 7 over which the necesary variation in orientation of the tines 7 can be effected to implement the present invention, is also a significant advance. It will be appreciated that, whilst in the embodiment illustrated in the present drawings the two sets of tines are driven from respective ends of the header, the drive also can in fact be effected from the same end although space and weight consideration make it more convenient to arrange the drive as in the illustrated embodiment.

From what precedes it will be appreciated that the various objectives as set out in the introduction of this specification have been accomplished with the embodiment as shown in the drawings and described herebefore. It also will be understood that changes to the details, materials, steps and arrangement of parts which have been described and illustrated to explain the nature of this invention will occur to and may be made by those skilled in the art upon a reading of this disclosure within the principle and scope of this invention. The foregoing description illustrates one embodiment of the invention; however, concepts, as based upon the description may be employed in other embodiments without departing from the scope of the invention.

Aspects of the header with the reel as described herein are claimed in the co-pending patent application no.    and no.

## Claims

1. A header for an agricultural machine comprising:
- a cutterbar (1) operable to cut standing crop;
- a rotatable reel (4) having a transverse shaft (5) defining the rotational main axis (83) thereof and including a plurality of crop-engaging members (6, 7) rotatably mounted thereon about respective further axes (84) disposed around the main shaft (5);
- first drive means (28) for rotatably driving the reel (4) in one direction (89);
- inclination control means (86) including steering means (87) positioned eccentrically of the main axis (83); said inclination control means (86), during rotation of the reel (4) in said one direction (89), being operable to rotate the crop-engaging members (6, 7) around the respective further axes (84) in the opposite direction; the arrangement being such that, when the steering means (87) are in a fixed position, the crop-engaging members (6, 7) are maintained at a fixed positional inclination with the free ends of the crop-engaging members (6, 7) defining a circularly shaped locus (62); and
- further drive means (34) associated with the steering means (87) for oscillating said steering means (87) during rotation of the reel (4) whereby the crop-engaging members (6, 7) equally are oscillated back-and-forth around their respective further pivot axes (84) on the reel (4) and the movement of the crop-engaging members (6, 7) is accelerated during half of each oscillation cycle of the steering means (87) and decelerated during the other half of each oscillation cycle of the steering means (87); the arrangement being such that the locus (63) of the free ends of said crop-engaging members (6, 7) deviates from said circular shape and said non-circular locus (63) includes an operative section (88) in the vicinity of said cutterbar (1) wherein the crop-engaging members (6, 7) engage crop material and sweep it across the cutterbar (1) in a generally rearward direction:
characterized in that:
- the operative section (88) of said non-circular locus (63 corresponds substantially to one full oscillation cycle of the steering means (87) starting from one extreme position of said steering means (87) and passing via the other extreme position of said steering means (87) back to the one extreme position;

- the portion (92) of the non-circular locus (63) associated with the half of said one full oscillation cycle wherein the crop-engaging members (6, 7) are accelerated, is positioned generally in front of the cutterbar (1); and
- the portion (93) of the non-circular locus (63) associated with half of said one full oscillation cycle wherein the crop-engaging members (6, 7) are accelerated, is positioned generally in front of the cutterbar (1).

2. A header according to claim 1 characterized in that the first and further drive means (28, 34) are timed so that, in the operative section (88) of the locus (63), the movement of each crop-engaging member (6, 7) changes from an accelerated to a decelerated movement at a location (94) generally vertically above the cutterbar (1).

3. A header according to claim 2, characterized in that :
- the inclination of the crop-engaging members (6, 7) relative to the horizontal is the smallest when said members (6, 7) are in said position (94) generally vertically above the cutterbar (1), and
- maximum inclination of the crop-engaging members (6, 7) relative to the horizontal is reached when said members (6, 7) assume a position associated with said one extreme position of the steering means (87); the crop-engaging members (6, 7), when assuming this maximum positional inclination, being located at or proximate to either the forward (95) or rearward end (96) of the operative section (88) of the locus (63) of the crop-engaging members (6, 7).

4. A header according to claim 3 further also comprising :
- a header floor (81) to the forward edge of which the cutterbar (1) is attached, and
- a header auger (3) positioned above the header floor (81) at a location rearwardly of the cutterbar (1), the header floor (81) and the header auger (3) defining a generally triangularly shaped crop transfer zone (67) therebetween and
characterized in that :
the crop-engaging members (6, 7), when in their position of maximum inclination relative to the horizontal at or proximate to the rearward end (96) of the operative section (88) of the locus (63), have their free ends located generally proximate to the forward edge of the header auger (3) so that the portion (93) of the operative section (88) of the locus (63) wherein the crop-engaging members (6, 7) are decelerated, extends generally between the cutterbar (1) and the header auger (3).

5. A header according to claim 4 characterized in that, as seen in side view of the header, the straight line (97) between the free end of a crop-engaging member (6, 7) and the further pivot axis (84) of said member (6, 7) on the reel (4) is aligned with the radius of the reel (4) extending between the main axis (83) and said further axis (84) when said free end of said crop-engaging member (6, 7) is positioned intermediate the cutterbar (1) and the forward edge of the header auger (3).

6. A header according to claim 5, characterized in that said position of the crop-engaging member (6, 7), whereat said straight line (97) is aligned with said radius, is reached upon completion of substantially 3/4 of the oscillation cycle of the steering means (87) and which generally corresponds to said operative portion (88) of the non-circular locus (63).

7. A header according to either claim 5 or 6 characterized in that, when said straight line (97) is aligned with said radius, the corresponding crop-engaging member (6, 7) has its free end positioned substantially midway between the cutterbar (1) and the forward edge of the header auger (3).

8. A header according to any of the claims 5-7 characterized in that :
- when a crop-engaging member (6, 7) is in its position of minimum inclination relative to the horizontal, the straight line (97) between the free end of said crop-engaging member (6, 7) and its pivot axis (84) on the reel (4) is inclined relative to the horizontal at an angle (98) in the range of 0°-20°; and
- when said crop-engaging member (6, 7) is in its position of maximum inclination relative to the horizontal, said straight line (97) is inclined relative to the horizontal at an angle (99) in the range of 30°-60°.

9. A header according to any of the claims 5 to 8 wherein each crop-engaging member (6, 7) is formed by a plurality of resilient tines (7) mounted on a transverse tine bar (6) at intervals along the length thereof and characterized in that each said tine bar (6) is rotatably mounted on the reel (4) at the corresponding further pivot axis (84) via crank arms (16); the arrangement being such that, as seen in side view of the header, the main dimension of the reel tines (7) of each crop-engaging member (6, 7) defines a larger angle with the horizontal than the straight line (97) between the free ends of said reel tines (7) and said corresponding further pivot axis (84).

10. A header according to claim 9, characterized in that, when a crop-engaging member (6, 7) is positioned in the vicinity of the cutterbar (1), the reel tines (7) thereof have their main dimension, as seen in side view of the header, oriented generally perpendicularly to the non-circular locus (63).

11. A header according to any of the preceding claims characterized in that :
- the steering means (87) control the positional inclination of n crop-engaging members (6, 7) having their respective further pivot axes (84) equiangularly spaced around the main axis (83) of the reel (4) and
- the steering means (87) complete n oscillation cycles during a full revolution of the reel (4); n equaling either 2, 3, 4 or 5.

12. A header according to any of the preceding claims characterized in that :
- the reel (4) comprises at least a pair of transversely spaced apart first spider members (11) for rotatably supporting the crop-engaging members (6, 7) between respective corresponding arms (12) thereof:
- the inclination control means (86) comprises at least one eccentric further spider member (18); the arms (19) of which are rotatably connected to respective crank arms (17) which in turn are fixedly coupled to corresponding crop-engaging members (6, 7); said eccentric further spider member (18) being guided eccentrically relative to the main axis (83) of the reel (4) by said steering means (87) which incorporates a mounting member (24) which itself is mounted for pivotal movement around said main axis (83) and which supports guide rollers (23) defining therebetween a center which is offset from said main axis (83); and
- the further drive means (34) are operable to oscillate said mounting member (24) of the steering means (87) around said main axis (83).

13. A header according to any of the preceding claims characterized in that, as seen in side view of the header, the operative section (88) of the non-circular locus (63) of the crop-engaging members (6, 7) comprises :
- a first portion (64) which, in use of the header, extends close to the ground (26), followed by a generally linear second portion (65) extending, in use, upwardly from the first portion (64) and passing a predetermined distance above the cutterbar (1), and which, in turn, is followed by a generally linear third portion (66) extending generally vertically, close to the auger (3).

14. A header according to any of the preceding claims, characterized in that the further drive means (34) comprise a linkage mechanism incorporating a crank (46) which is drivingly coupled to the reel shaft (5) to be rotated thereby, and a link (35) connected between the crank (46) and the steering means (87) of the inclination control means (86); the arrangement being such that, in use, rotation of the reel (4) causes the crank (46) to rotate, which in turn reciprocates the link (35) and thus oscillates the steering means (87).

15. A header according to any of the claims 1 to 13, characterized in that the further drive means (34) comprises a linkage mechanism incorporating :
- a crank (46) which is drivingly coupled to the reel shaft (5) to be rotated thereby;

- a bell-crank lever (42) mounted for oscillatory movement on the header and coupled at one end to the crank (46); and
- a link (35) connected between the other end of the bell-crank lever (42) and the steering means (87) of the inclination control means (86); the arrangement being such that, in use, rotation of the reel (4) causes the crank (46) to rotate, which in turn rocks the bell-crank lever (42) which reciprocates the further link (35) and thus oscillates the steering means (87).

16. A header according to any of the preceding claims characterized in that
- the crop-engaging members (6, 7) are divided into two sets such that one crop-engaging member (6, 7) of one set alternates with one crop-engaging member (6, 7) of the other set; and
- further drive means (34) and inclination control means (86) including steering means (87) are associated with each set of crop-engaging members; said further drive means (34), inclination control means (86) and steering means (87) being operated in phased relationship such that the loci (63) of both sets of crop-engaging members (6, 7) at least substantially overlap each other.

17. A header according to claim 16 when appended to either claim 14 of 15 characterized in that the crank (46) of the further drive means (34) associated with the one set of crop-engaging members (6, 7) is positioned 180° out of phase with respect of the crank (46) of the further drive means (34) associated with the other set of crop-engaging members (6, 7).

FIG.1

FIG. 2

0 280 790

FIG.4

FIG.3

FIG.5

FIG.6

**FIG. 7**

0 280 790

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 497 729 (HETH)<br><br>* Whole document * | 1-4,11,12 | A 01 D 57/02 |
| Y | SOVIET INVENTIONS ILLUSTRATED, section P, week 41, 24th November 1982, no. 5143 E/41, Derwent Publications Ltd., London, GB; & SU-A-886 820 (OMSK AGRIC INST) 07-12-1981 | 1-4,11,12 | |
| A | Idem | 8,10,13 | |
| D,A | SOVIET INVENTIONS ILLUSTRATED, section P, week 8434, 3rd October 1984, no. 84-212201/34, Derwent Publications Ltd., London, GB; & SU-A-1 063 315 (OMSK AGRIC INST) 30-12-1983 | 1,14 | TECHNICAL FIELDS SEARCHED (Int. Cl.4)<br><br>A 01 D |
| A | SOVIET INVENTIONS ILLUSTRATED, section P, week 8708, 4th March 1987, no. 87-054999/08, Derwent Publications Ltd., London, GB; & SU-A-1 240 384 (BELO AGRIC MECHN) 30-06-1986 | 1,14 | |
| A | GB-A- 680 884 (INTERNATIONAL HARVESTER) | | |

The present search report has been drawn up for all claims

| Place of search | Date of completion of the search | Examiner |
|---|---|---|
| THE HAGUE | 21-10-1987 | DE LAMEILLIEURE D. |